Europäisches Patentamt

European Patent Office

Office européen des brevets

(11) Publication number: **0 108 041**
**B1**

# (12) EUROPEAN PATENT SPECIFICATION

(45) Date of publication of patent specification: **23.07.86**

(21) Application number: **83830209.9**

(22) Date of filing: **24.10.83**

(51) Int. Cl.⁴: **B 60 G 13/00, B 60 G 15/06**

(54) Strut for MacPherson suspensions for motor vehicles.

(30) Priority: **26.10.82 IT 6824882**

(43) Date of publication of application:
**09.05.84 Bulletin 84/19**

(45) Publication of the grant of the patent:
**23.07.86 Bulletin 86/30**

(84) Designated Contracting States:
**BE DE FR GB NL SE**

(56) References cited:
**EP-A-0 023 968**
**GB-A-2 026 405**
**GB-A-2 050 968**

(73) Proprietor: **FIAT AUTO S.p.A.**
**Corso Giovanni Agnelli 200**
**I-10135 Torino (IT)**

(72) Inventor: **Carnino, Corrado**
**Via Graglia 6**
**I-10136 Torino (IT)**

(74) Representative: **Buzzi, Franco et al**
**c/o Jacobacci-Casetta & Perani S.p.A. Via Alfieri,**
**17**
**I-10121 Torino (IT)**

Courier Press, Leamington Spa, England.

## Description

The present invention relates to struts for MACPHERSON suspensions for motor vehicles, of the type comprising a tubular metal element which constitutes the outer casing of a telescopic shock absorber, and a wheel carrying member in the form of a pressed sheet metal housing attached to the lower end of the tubular element and including an upper tile-shaped portion which surrounds the lower end of the tubular element and a lower portion having an aperture for supporting the axle journal of a wheel for rotation, such as described in GB—A—2 026 405.

In struts of this type, the wheel carrying member is generally provided with an arm which acts as a steering lever for connection to a steering linkage, or as an anchoring lever for connection to an attachment bar of the vehicle structure. In known struts of the type specified above this arm is usually constituted by an element which is fixed to a suitable attachment part of the wheel carrying member and projects therefrom, resulting in disadvantages due to the complexity and difficulty of manufacture.

The object of the present invention is to avoid these disadvantages by providing a strut of the type defined at the beginning which can be made simply and economically and at the same time is lighter and stronger than conventional struts of this type.

According to the invention, this object is achieved by virtue of the fact that the upper tile-shaped portion of the wheel carrying member surrounds only partially the lower end of said tubular element and has a front coupling part and an elongate, flanged rear projection, and in that the strut further includes a second tile-shaped housing attached to the lower end of said tubular element on the opposite side from the upper tile-shaped portion of the wheel carrying member, which has an elongate flanged rear projection permanently fixed to the rear elongate projection of the tile-shaped portion of the wheel carrying member so as to define therewith a steering or anchoring arm, and a front coupling part rigidly connected to the front coupling part of the upper tile-shaped portion of the wheel carrying member.

By virtue of this characteristic, the steering arm is formed in a particularly simple and economical way with the advantage of improving the strength of the wheel carrying member.

According to the invention, the rear elongate projections of the two housings are welded together, while the flanged front parts may be connected together either by welding or screw means. In the second case, the two housings are clamped to the lower end of the tubular element by the clamping action of the screw means.

The invention will now be described in detail with reference to the appended drawings, provided purely by way of non-limiting example, in which:

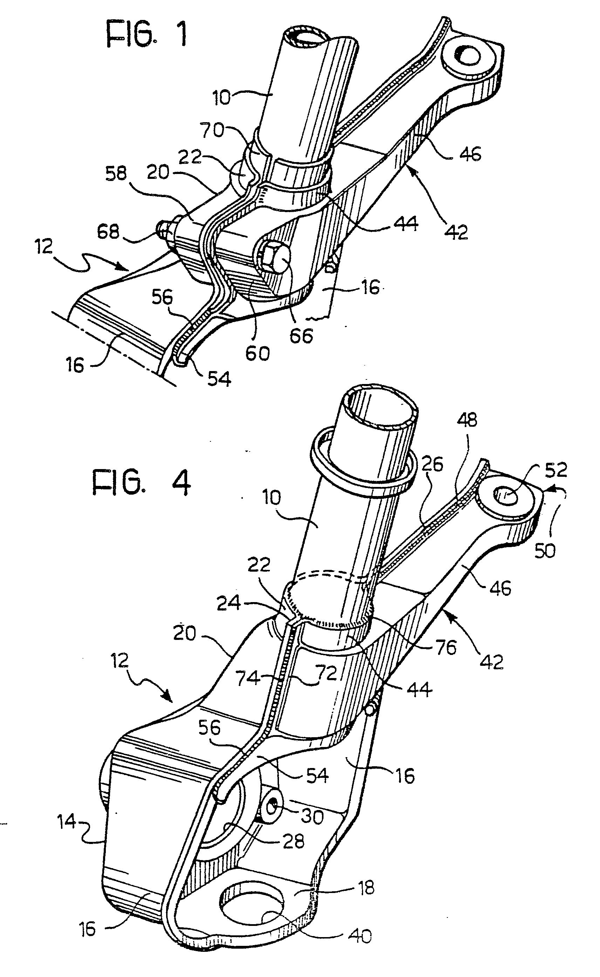

Figure 1 is a schematic perspective view of a part of a strut for MACPHERSON suspensions according to the invention;

Figure 2 is a partially sectioned schematic view showing the strut of Figure 1 in the condition of use;

Figure 3 is a side elevational view along the arrow III of Figure 2, and

Figure 4 shows a variant of Figure 1.

The drawings illustrate a strut for a MACPHERSON suspension which can be fitted to a front steered wheel of a motor vehicle. The strut includes a telescopic hydraulic shock absorber of known type, having an outer casing with a lower end 10. A wheel carrying member, generally indicated 12, is fixed to the lower end 10.

The wheel carrying member 12 is constituted by a piece of pressed sheet metal in the form of a housing with a front wall 14, two side walls 16, and a lower wall 18. The upper portion 20 of the front wall 14 is tile-shaped and includes a cylindrical half-collar 22 the rear edge of which is connected to an elongate flanged projection 26 the function of which will be clarified below.

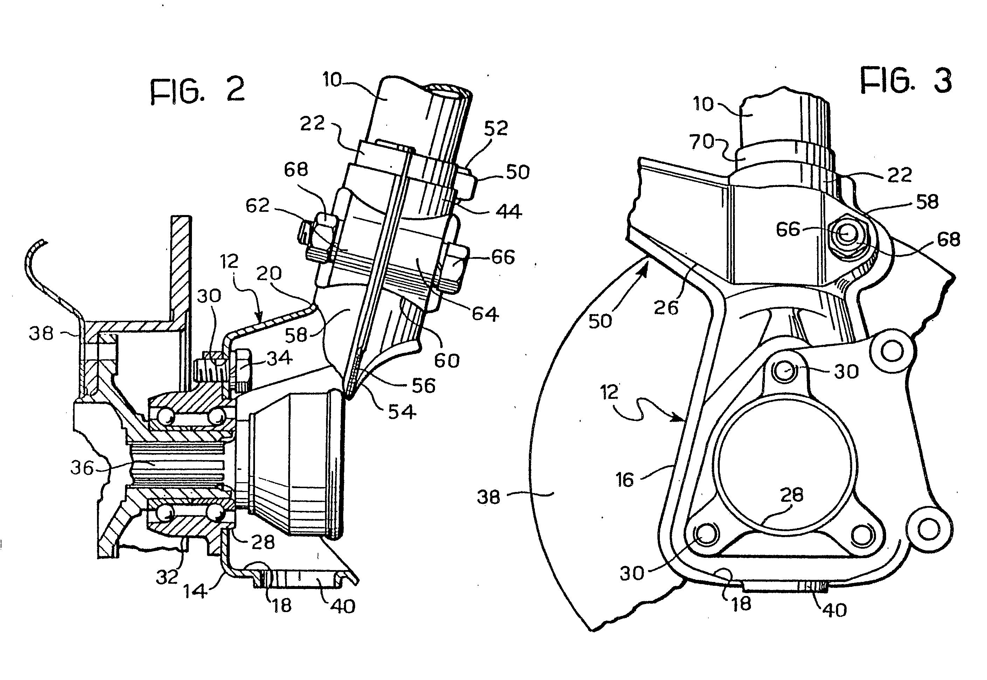

As illustrated in greater detail in Figure 3, a central circular aperture 28 and three holes 30 which are spaced angularly with respect to the axis of the aperture 28 are formed in the front wall 14. The aperture 28, as illustrated in Figure 2, receives a bearing bush 32 which is fixed to the front wall 14 by screws 34 inserted in the holes 30 and supports the axle journal 36 of a wheel 38 for rotation.

The housing 12 is also provided with an aperture 40 in its lower wall 18, which may be used for fixing part of a universal joint, not shown, for articulation to a suspension wishbone. Moreover, one of the two side walls 16 of the housing 12 may be provided with a support part, not shown, for the connection of the stator part of a wheel brake, for example, the caliper carrier of a disc brake.

A second housing 42 has a cylindrical half-collar 44 partially surrounding the lower part 10 of the casing on the opposite side from the half-collar 22 of the housing 12. The housing 42 has an elongate flanged rear projection 46 which is fixed by a bead weld 48 to the elongate projection 26 of the housing 12 so as to define a steering arm 50 having an eye 52 for receiving part of a universal joint for the connection of a steering linkage. Naturally, when the strut is to be associated with a non-steered wheel, the arm 50 could be used for connection in a known manner to an attachment bar of the vehicle structure.

The front of the housing 42, that is, the side opposite the arm 50, has an appendage 54 welded at 56 to the corresponding part of the edge of the housing 12.

In the embodiment illustrated in Figures 2 and 3, the upper tile-shaped portion 20 of the housing 12 and the housing 42 have respective facing lugs 58, 60 at the front, in which are formed two aligned holes 62, 64 for the passage of a screw 66 having a clamping nut 68. Thus, the unit constituted by the two housings 12, 42 are attached to the lower end 10 of the casing by clamping, through the bringing together of the two half-collars 22, 44 by tightening-up the nut 68. It should also be noted that, in this case, a split sleeve 70 with a thickness which can vary in dependence on the diameter of the casing 10 may be interposed between the two half-collars 22, 44 and the end of the casing. In this manner, the unit formed by the two housings 12, 42 may easily be adapted to shock absorbers of different diameters.

The variant illustrated in Figure 4 is generally similar to the embodiment described previously and only the differences will be described in detail, the same reference numerals being used for identical or similar parts. In this variant, the two lugs 58, 60 of the housings 12, 42 are absent and are replaced by respective coupling flanges 24, 72 connected together by a bead weld 74. In this case, the unit formed by the two housings 12, 42 is fixed to the lower end 10 of the casing by means of a bead weld 76 applied to the upper edges of the two half-collars 22, 44.

## Claims

1. Strut for MACPHERSON suspensions for motor vehicles, comprising a tubular metal element which constitutes the outer casing of a telescopic shock absorber, and a wheel carrying member in the form of a pressed sheet metal housing attached to the lower end of the tubular element and including an upper tile-shaped portion which surrounds the lower end of the tubular element and a lower portion having an aperture for supporting the axle journal of a wheel for rotation, characterised in that the upper tile-shaped portion (20) of teh wheel carrying member (12) surrounds only partially the lower end of said tubular element and has a front coupling part (58; 24) and an elongate, flanged rear projection (26), and in that the strut further includes a second tile-shaped housing (42) attached to the lower end (10) of said tubular element on the opposite side from the upper tile-shaped portion (20) of the wheel carrying member (12), which as an elongate, flanged rear projection (46) permanently fixed to the rear elongate projection (26) of the tile-shaped portion (20) of the wheel carrying member (12) so as to define therewith a steering or anchoring arm (50), and a front coupling part (60; 72) rigidly connected to the front coupling part (58; 24) of the upper tile-shaped portion (20) of the wheel carrying member (12).

2. Strut according to Claim 1, characterised in that the elongate rear projections (26, 46) of the two housings (12, 42) are fixed together by welding (48).

3. Strut according to Claim 1 or claim 2, characterised in that the front coupling parts (58, 60) of the two housings (12, 42) are connected together by screw clamping means (66, 68), and in that the two housings (12, 42) are clamped to the lower end (10) of the tubular element by the clamping of the screw means (66, 68).

4. Strut according to Claim 3, characterised in that a split sleeve (70) is interposed between the two housings (12, 42) and the lower end (10) of the tubular element.

5. Strut according to Claim 1 or Claim 2, characterised in that the front coupling parts (24, 72) of the two housings (12, 42) are connected together by welding (74), and in that the two housings (12, 42) are also attached to the lower end (10) of the tubular element by welding (76).

## Patentansprüche

1. Federbein für Macpherson-Aufhängungen für Kraftfahrzeuge mit einem Rohrelement aus Metall, das das Außenrohr eines Teleskop-Schwingungsdämpfers bildet,
und einem an dem unteren Ende des Rohrelements befestigten Radträgerglied in Form eines formgepreßten Metallblechgehäuses mit einem das untere Ende des Rohrelements umgebenden oberen dachziegelförmigen Bereich und einem unteren Abschnitt mit einer Öffnung zur drehbaren Lagerung des Achzapfens eines Rades, dadurch gekennzeichnet,
daß der obere dachziegelförmige Bereich (20) des Radträgerglieds (12) das untere Ende (10) des genannten Rohrelements nur teilweise umgibt und ein vorderes Verbindungsteil (58; 24) und einen hinteren langgstreckten umgebördelten Ansatz (26) besitzt,
und daß das Federbein ferner folgende Teile umfaßt:
ein zweites dachziegelförmiges Gehäuse (42), das an dem unteren Ende (10) des Rohrelements auf der dem oberen dachziegelförmigen Bereich (20) des Radträgerglieds (12) entgegengesetzten Seite befestigt ist und das einen langgestreckten umgebördelten hinteren Ansatz (46) aufweist, der dauerhaft an dem hinteren langgestreckten Ansatz (26) des dachziegelförmigen Bereichs (20) des Radträgerglieds (12) befestigt ist, derart daß er mit diesem einen Lenk- oder Verankerungsarm bildet
sowie ein vorderes Verbindungsteil (60; 72), das mit dem vorderen Verbindungsteil (58; 24) des oberen dachziegelförmigen Bereichs (20) des Radträgerglieds (12) starr verbunden ist.

2. Federbein nach Anspruch 1, dadurch gekennzeichnet, daß die langgestreckten hinteren Ansätze (26, 46) der beiden Gehäuse (12, 42) durch eine Schweißverbindung (48) miteinander verbunden sind.

3. Federbein nach Anspruch 1 oder 2, dadurch gekennzeichnet, daß die vorderen Verbindungsteile (58, 60) der beiden Gehäuse (12, 44) durch Klemmschrauben (66 68) miteinander verbunden sind und daß die beiden Gehäuse (12, 42) an dem unteren Ende (10) des Rohrelements durch die genannten Klemmschrauben (66, 68) festgeklemmt sind.

4. Federbein nach Anspruch 3, dadurch gekennzeichnet, daß zwischen den beiden Gehäusen (12, 42) und dem unteren Ende (10) des Rohrelements eine geschlitzte Hülse (70) angeordnet ist.

5. Federbein nach Anspruch 1 oder 2, dadurch gekennzeichnet, daß die vorderen Verbindungsteile (24, 72) der beiden Gehäuse (12, 42) durch eine Schweißverbindung (74) miteinander verbunden sind und daß die beiden Gehäuse (12, 42) außerdem mit dem unteren Ende (10) des Rohrelements durch eine Schweißverbindung (76) miteinander verbunden sind.

## Revendications

1. Jambe de suspension MacPherson pour véhicules automobiles, du type qui comprend un élément métallique tubulaire constituant l'enveloppe extérieure d'un amortisseur télescopique et un élément support de roue, présentant la forme d'un boîtier en tôle emboutie qui est fixé à l'extrémité inférieure de l'élément tubulaire et qui comprend une partie supérieure en en forme de tuile qui entoure l'extrémité inférieure de l'élément tubulaire et une partie inférieure présentant une ouverture destinée à supporter en rotation la fusée d'une roue, caractérisée en ce que la partie supérieure (20) en forme de tuile de l'élément support de roue (12) entoure seulement partiellement l'extrémité inférieure dudit élément tubulaire et possède une partie avant d'accouplement (58, 24) et un prolongement arrière (26) allongé et muni d'un rebord, et en ce que la jambe comprend en outre un deuxième boîtier (42) en forme de tuile fixé à l'extrémité inférieure (10) dudit élément tubulaire, de l'autre côté de la partie supérieure en forme de tuile (20) de l'élément support de roue (12), qui possède un prolongement arrière (46) allongè, muni d'un rebord et fixé par un liaison permanente au prolongement arrière allongé (26) de la partie en forme de tuile (20) de l'élément support de roue (12) de manière à définir avec ce prolongement un bras de direction ou d'ancrage (50), et une partie d'accouplement avant (60; 72) reliée rigidement à la partie d'accouplement avant (58; 24) de la partie supérieure en forme de tuile (20) de l'élément support de roue (12).

2. Jambe de suspension selon la revendication 1, caractérisée en ce que les prolongements arrière allongées (26, 46) des deux boîtiers (12, 42) sont fixés l'un à l'autre par soudage (48).

3. Jambe de suspension selon la revendication 1 ou la revendication 2, caractérisée en ce que les partie d'accouplement avant (58, 60) des deux boîtiers (12, 42) sont assemblées l'une à l'autre par des moyens de serrage à vis (66, 68) et en ce que les deux boîtiers (12, 42) sont serrés sur l'extrémité inférieure (10) de l'élément tubulaire par le serrage des moyens à vis (66, 68).

4. Jambe de suspension selon la revendication 3, caractérisée en ce qu'un manchon fendu (70) est interposé entre les deux boîtiers (12, 42) et l'extrémité inférieure (10) de l'élément tubulaire.

5. Jambe de suspension selon la revendication 1 ou la revendication 2, caractérisée en ce que les parties d'accouplement avant (24, 72) des deux boîtiers (12, 42) sont assemblées l'une à l'autre par soudage (74) et en ce que les deux boîtiers (12, 42) sont également fixés à l'extrémité inférieure (10) de l'élément tubulaire par soudage (70).

FIG. 1

10
70
58 20 22
68
12
56
16
54
60 66
16
44 42
46
16

FIG. 4

10
48
26
52
50
22
24
20
76
12
74 72
44
56
42
46
54
16
14
30
28
16
18
40

FIG. 2

FIG. 3

10

22

52

50

68

44

62

66

12

20

64

30

58

34

60

38

56

54

36

32    14

28

18    40

10

70

22

58

66

68

50

26

12

16

38

30

28

30

18    40

0 108 041